# DEMANDE DE BREVET EUROPEEN

(11) **EP 1 909 124 A1**
(43) Date de publication de la demande: **09.04.2008**
(21) Numéro de dépôt: 07117590.5
(22) Date de dépôt: 01.10.2007
(51) Int. Cl.: G02B 6/30, G02B 6/34

(54) **Dispositif de couplage amélioré entre une fibre optique et un guide optique intégré sur un substrat**

(30) Priorité: 04.10.2006 FR 0654090
(71) Demandeur: COMMISSARIAT A L'ENERGIE ATOMIQUE, 75015 Paris (FR)
(72) Inventeur: Kopp, Christophe, 38120, FONTANIL-CORNILLON (FR)
(74) Mandataire: Poulin, Gérard

(57) **Abrégé**

L'invention concerne un dispositif optique comprenant un capot (150) d'assemblage et de couplage optique entre au moins un guide d'onde (102) intégré à un premier support et au moins une fibre optique (122) intégrée à un deuxième support, le capot (150) étant apte à être fixé au premier support et comprend :
- une ou plusieurs rainures (158, 159) prévues pour permettre au capot de s'imbriquer avec le support de la fibre optique,
- au moins une autre rainure (157) dotée de flancs longitudinaux, d'un fond, et d'une paroi réalisant un angle non nul avec le fond et les flancs, ladite autre rainure étant destinée à être placée dans le prolongement de l'axe optique de la fibre et de sorte que ladite paroi est située en regard de la fibre,
- un système optique disposé au niveau d'une paroi de ladite autre rainure (157), apte à dévier vers la fibre un faisceau lumineux en provenance du guide d'onde et/ou à dévier vers le guide d' onde un faisceau lumineux en provenance de la fibre optique.

## Description

### DOMAINE TECHNIQUE

La présente invention concerne le domaine des systèmes optiques de transmission de données. Un objectif de l'invention est de proposer un dispositif amélioré d'assemblage et de couplage entre un premier guide d'onde, par exemple un guide d'onde optique intégré sur un substrat et un deuxième guide d'onde, par exemple une fibre optique montée dans un connecteur. Le dispositif selon l'invention permet un assemblage amovible avec la fibre. L'invention peut s'appliquer notamment aux bus optiques haut débit, de microprocesseur à microprocesseur, de microprocesseur à mémoire, et aux dispositifs émetteur/récepteur pour les réseaux optiques de télécommunication.

### ART ANTÉRIEUR

La mise en oeuvre de dispositifs de guides optiques planaires, peut permettre d'obtenir sur un même substrat ou sur une même puce, des fonctions complexes de gestion de faisceaux optiques comme le multiplexage, le démultiplexage, la modulation, le routage spectral. Ces fonctions peuvent être mises en oeuvre aussi bien pour des liaisons optiques très courtes distances, par exemple de l'ordre du millimètre, et réalisées entre puces, ou des liaisons optiques très longues distances, par exemple de l'ordre de plusieurs kilomètres, comme dans un réseau métropolitain.

L'intégration de nombreuses fonctions optiques sur une même puce nécessite une miniaturisation poussée des circuits optiques, et en particulier une miniaturisation de la section des guides optiques planaires à des dimensions inférieures au micron. Pour des transmissions moyennes et longues distances, par exemple de plusieurs mètres à plusieurs kilomètres, le médium de transport optique privilégié est la fibre optique, dont les dimensions de la section demeurent de l'ordre d'une dizaine à plusieurs dizaines de microns. Un système de couplage de la lumière entre un guide optique planaire et une fibre optique est prévu pour compenser une désadaptation dimensionnelle entre ces deux composants.

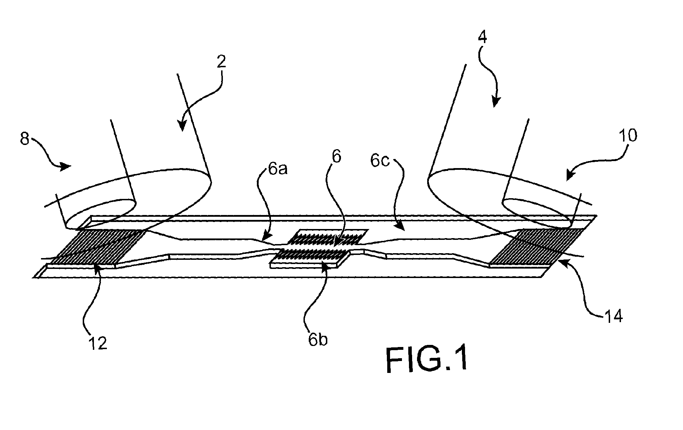

Un exemple de dispositif de couplage optique suivant l'art antérieur, est illustré sur la figure 1. Le couplage est réalisé entre une première fibre optique 2, et un guide d'onde 6, ainsi qu'entre le guide d'onde 6 et une deuxième fibre optique 4. Le coeur 8 de la première fibre optique 2 est couplée au guide d'onde 6 par l'intermédiaire d'un premier réseau de diffraction 12 de taille de l'ordre de 10 µm x 10 µm, tandis que le coeur 10 de la deuxième fibre optique 2, est couplé au guide d'onde 6 par l'intermédiaire d'un deuxième réseau de diffraction 14 qui peut être de même taille que le premier. Le guide d'onde 6, comporte une première partie rétrécie 6a reliant le premier réseau de diffraction et une partie centrale 6b de dimension critique de l'ordre de plusieurs centaines de nanomètres, ainsi qu'une deuxième partie rétrécie 6c reliant la partie centrale 6b et le deuxième réseau 14 de diffraction. Les parties rétrécies 6a et 6c du guide d'onde 6 permettent d'adapter progressivement les dimensions d'un faisceau optique issu d'un des réseaux de diffraction 12, 14, à celles de la partie centrale 6b du guide 6. Dans ce dispositif, pour permettre d'adapter le faisceau Gaussien sortant du réseau de diffraction au mode de la fibre, un réseau de diffraction est utilisé.

Les documents US 2006/0022289A1 et WO 2003/088286A2 présentent différentes variantes de dispositif de couplage optique sur un substrat, entre une fibre optique fixée au substrat et un composant optique intégré au substrat, par exemple sous forme d'un ou plusieurs guides d'ondes ou d'un réseau de diffraction. Le dispositif de couplage comporte un miroir concave permettant de dévier vers le composant optique, un faisceau lumineux provenant de la fibre optique. Dans ce dispositif, le composant peut être réalisé en face arrière du substrat tandis que le dispositif de couplage et la fibre peuvent être fixés au substrat par l'intermédiaire d'une colle. Pour ce dispositif, une fois que le couplage optique et la fibre sont collés au substrat, l'assemblage ainsi que le réglage du couplage sont définitifs.

Le document US 2004/0156589A1 divulgue un dispositif de couplage optique intégré sur un substrat et doté en particulier d'un réseau de diffraction ainsi que de miroirs de Bragg.

Il se pose le problème de trouver un nouveau dispositif de couplage optique entre une fibre optique et un guide d'onde intégré.

### EXPOSÉ DE L'INVENTION

L'invention concerne un dispositif optique comprenant un capot d'assemblage et de couplage optique entre au moins un guide d'onde et au moins une fibre optique, le capot étant susceptible d'être fixé à un support du guide d'onde et comprenant:
- un substrat,
- une ou plusieurs rainures d'assemblage formées dans le substrat prévues pour permettre au capot de s'imbriquer avec un support de la fibre optique,
- au moins une autre rainure formée dans le substrat et dotée de flancs longitudinaux, d'un fond, et d'une paroi réalisant un angle non-nul avec ledit fond et lesdits flancs longitudinaux, ladite autre rainure étant destinée à être placée dans le prolongement de l'axe optique de la fibre et de sorte que ladite paroi est située en regard de la fibre,
- un système optique disposé au niveau de ladite paroi de ladite autre rainure et prévu pour dévier vers la fibre un faisceau lumineux en provenance du guide d'onde et/ou dévier vers le guide d'onde un faisceau lumineux en provenance de la fibre optique.

Le support de la fibre optique peut être apte à s'emboiter avec le capot optique, par exemple par l'intermédiaire de broches de guidage aptes à s'imbriquer dans les rainures d'assemblage dudit capot.

Le dispositif suivant l'invention permet un assemblage amovible.

Le dispositif peut comprendre également au moins un réseau de diffraction.

Le réseau de diffraction peut être relié audit guide d'onde et intégré ou formé sur le support du guide d'onde.

Selon une possibilité de mise en oeuvre, ladite paroi présente un angle non-nul et différent de 90° par rapport au plan principal du substrat, par exemple un angle de l'ordre de 54,75° par rapport au plan principal du substrat.

Le système optique peut comprendre : un miroir formé sur ladite paroi. Le miroir peut être un miroir plan incliné par rapport au plan principal du substrat. Le miroir peut être destiné à être incliné par rapport à l'axe optique de la fibre et à l'axe optique du guide d'onde.

Le système optique peut également comprendre: une lentille sphérique. La lentille peut être accolée au miroir.

Selon une possibilité, lorsque le capot optique est emboité avec le support de la fibre, le capot optique peut être mobile par rapport au support de la fibre dans une direction parallèle à la direction principale de la rainure.

Selon une mise en oeuvre possible du dispositif, le support du guide d'onde peut être une puce formée à partir d'un substrat et dotée d'un ou plusieurs composants ou éléments ou fonctions, électroniques et/ou optoélectroniques. Ladite puce peut être par exemple réalisée en technologie CMOS.

Ledit support de la fibre optique peut être un connecteur, par exemple un connecteur de type MTP/MPO.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels:
- la figure 1 illustre un dispositif de couplage optique suivant l'art antérieur, doté de deux réseau de diffraction et permettant un couplage d'une part entre une première fibre optique et un guide d'onde et d'autre part entre le guide d'onde et une deuxième fibre optique,
- la figure 2 illustre, selon une vue en coupe, un exemple de capot de couplage optique suivant l'invention, entre une fibre optique montée sur un support emboité audit capot et un guide d'onde formé sur une puce assemblée audit capot,
- la figure 3 illustre, selon une vue de dessus, ladite puce sur laquelle ledit guide d'onde est formé et comportant un réseau de diffraction relié au guide d'onde,
- la figure 4 illustre, selon une vue de face, un capot de couplage optique suivant l'invention et une puce assemblée audit capot et sur laquelle un guide d'onde est intégré,
- les figures 5 à 9 illustrent différents réglages du positionnement du dispositif de couplage optique suivant l'invention,
- la figure 10 illustre une vue en perspective d'une rainure en forme de V réalisée dans le capot optique en cours de fabrication, la rainure étant destinée à contenir la fibre optique et à être dotée de moyens optiques pour dévier vers un guide d'onde un faisceau lumineux en provenance de la fibre, ou dévier vers la fibre optique un faisceau lumineux en provenance d'un guide d'onde,
- la figure 11 illustre, selon une vue de côté, un exemple de capot optique suivant l'invention, doté d'une rainure en forme de V comportant une lentille sphérique,
- les figures 12A-12H illustrent différentes étapes d'un exemple de procédé de réalisation de billes de brasage sur ledit capot optique, en vue de son assemblage avec une puce dotée d'au moins un guide d'onde,
- les figures 13A-13D illustrent différentes étapes d'un exemple de procédé d'assemblage de type dit « flip-chip » entre le capot optique et ladite puce dotée d'au moins un guide d'onde,
- les figures 14A-14B illustrent des variantes de guides d'ondes susceptibles d'êtres intégrés à une puce avec lequel le capot de couplage optique suivant l'invention est destiné à être assemblé.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

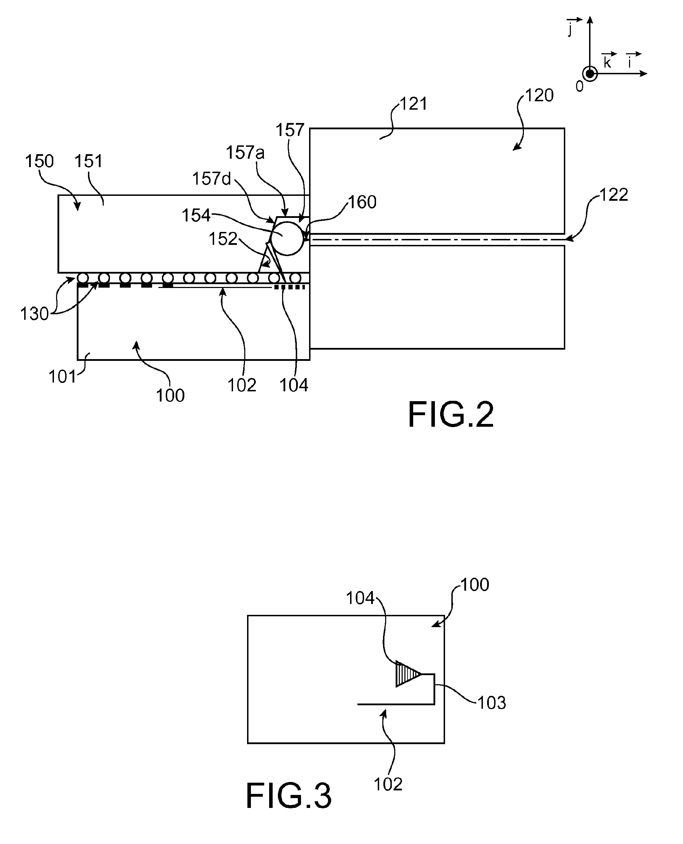

Un exemple de dispositif optique suivant l'invention va à présent être donné, en liaison avec la figure 2.

Ce dispositif optique comprend un dispositif d'assemblage et de couplage optique entre au moins un premier élément 100 comportant au moins un premier guide d'onde 102 intégré à un premier support et au moins un deuxième élément 120 intégré à un deuxième support comprenant au moins un deuxième guide d'onde de taille différente de celle du premier guide d'onde et par exemple supérieure à celle du premier guide d'onde 102. Le deuxième guide d'onde peut être par exemple une fibre optique 122. L'assemblage peut être réalisé de sorte que le guide d'onde 102 et la fibre optique 122 sont parallèles, au moins à proximité de la zone de couplage. Le couplage peut être réalisé de sorte que le guide d'onde 102 et la fibre optique 122 sont situés respectivement dans des plans parallèles différents.

Le premier élément 100 peut être par exemple une puce réalisée en technologie CMOS (CMOS pour Complementary Metal Oxide Semi-conductor) et formée à partir d'un substrat 101, comportant un ou plusieurs guides d'ondes intégrés et notamment le guide d'onde 102. La puce peut être dotée de composants optoélectroniques et/ou électroniques intégrés, par exemple des transistors et/ou par exemple une ou plusieurs mémoires. Le premier élément 100 peut également comprendre au moins un réseau de diffraction 104 prévu pour le couplage optique avec le guide d'onde 102 et relié à ce dernier. Le réseau de diffraction 104 peut être par exemple prévu pour réaliser un couplage au 2^{ème} ordre. Le guide d'onde 102 peut être également doté d'un virage 103 à 180°, pour effectuer la liaison au réseau de diffraction 104, comme sur la figure 3 illustrant le premier élément 100 selon une vue de dessus.

Le deuxième élément 120 peut être un connecteur tel que par exemple un connecteur de type MTP^{®}/MPO ou un connecteur MPO de type MTP (MPO pour « Multi-fiber Push On ») qui peut être formé d'un support 121 plastique dans lequel sont insérées une ou plusieurs fibres optiques et notamment une fibre optique notée 122.

L'assemblage et le couplage entre le premier élément 100 et le deuxième élément 120 est réalisé par l'intermédiaire d'un dispositif que l'on appellera « capot optique » 150. Le capot optique 150 peut être formé à partir d'un substrat 151 qui peut être semi-conducteur, par exemple à base de silicium. Le capot optique 150 et le premier élément 100 peuvent être destinés à être fixés l'un à l'autre. Le capot optique 150 et le premier élément 100 peuvent être assemblés ou hybridés ou fixés l'un à l'autre par l'intermédiaire de billes 130 de brasure, par exemple à l'aide d'une technique dite de « flip-chip » avec auto-alignement. Le capot optique 150 peut également comprendre des interconnexions et est susceptible de former une interface de connexion électrique entre le premier élément 100 et un boîtier ou un PCB (PCB pour « printed circuit board » ou carte de circuit imprimé) sur lequel un dispositif ou composant microélectronique peut être reporté. Le capot optique 150 et le deuxième élément 120 peuvent être assemblés par emboitement ou imbrication. L'assemblage entre le capot optique 150 et le deuxième élément 120 est amovible de sorte que le capot optique 150 et le deuxième élément 120 peuvent être assemblés puis désassemblés. Le capot optique 150 comporte un système optique pour dévier un faisceau lumineux destiné à traverser le guide d'onde 102 et la fibre optique 122 et éventuellement adapter la taille de ce faisceau entre le guide d'onde 102 et la fibre optique 122. Le système optique peut permettre notamment de dévier un faisceau lumineux en provenance de la fibre optique en direction du guide d'onde, et/ou de dévier un faisceau lumineux en provenance du guide d'onde en direction de la fibre optique. Le système optique peut également permettre d'adapter au guide d'onde, la taille d'un faisceau lumineux en provenance de la fibre optique et/ou d'adapter à la fibre optique, la taille d'un faisceau lumineux en provenance du guide d'onde. Le système optique peut comprendre un miroir 152, ainsi qu'une lentille 154 associée au miroir. Le miroir 152 peut être formé dans le substrat 151 et être agencé de sorte que la surface réfléchissante de ce dernier réalise un angle α non nul avec le plan principal du substrat 151 (défini par un plan passant par le substrat et parallèle au plan [O; *̅i̅*̅ ;*̅k̅*̅] d'un repère orthogonal [○; *̅i̅*̅ ; *̅j̅*̅ ; *̅k̅*̅ ] indiqué sur la figure 2) . Le miroir 152 peut également réaliser un angle α non nul avec l'axe optique du guide d'onde 102 et l'axe optique de la fibre 122. Par axe optique du guide d'onde 102, on entend la direction principale du guide 102 ou une direction définie sur la figure 2 par un axe passant par le guide 102 et parallèle au vecteur *̅i̅*̅ du repère orthogonal [O; *̅i̅*̅ ; *̅j̅*̅ ;*̅k̅*̅ ]*.* Par axe optique de la fibre 122, on entend la direction principale de la fibre 122 ou une direction définie sur la figure 2 par un axe passant par la fibre 122 et parallèle au vecteur *̅i̅*̅. La lentille 154 peut être sphérique et sous forme d'une bille de diamètre compris par exemple entre 0,3 mm et 0,5 mm. La lentille 154 est située dans une rainure 157 ou une tranchée 157 formée dans le substrat 151, et placée dans le prolongement de la fibre 122. La rainure 157 est dotée d'un fond 157a en regard du premier élément 100 et de flancs longitudinaux (non représentés) s'étendant dans une direction parallèle au plan principal du substrat 151. Selon une possibilité, les flancs longitudinaux de la rainure 157 peuvent former un 'V' représentatif de la manière dont ils ont été réalisés dans le substrat 151.

La lentille 154 peut être accolée au miroir 152, ce dernier pouvant être formé sur une paroi 157d de la rainure 157 située en regard ou en face de la fibre 122, et réalisant un angle non-nul avec les flancs de la rainure ainsi qu'avec une normale au plan principal du substrat 151. Le miroir 152 peut être formé d'un dépôt métallique par exemple à base d'aluminium ou d'or.

Le réglage du système optique est prévu de sorte qu'un faisceau lumineux issu de la fibre 122 et traversant le système optique est dévié par ce dernier en direction du réseau de diffraction 104 relié au guide d'onde 102. Selon une possibilité de mise en oeuvre, le réseau de diffraction 104 peut avoir une forme de pointe ou effilée, et/ou être un réseau type anamorphoseur ou être un réseau de type communément appelé « taper ».

Le trajet d'un faisceau lumineux 160 sortant de la fibre 122 peut être le suivant : le faisceau se propage le long de la rainure 157, puis traverse la lentille 154 sphérique puis est dévié par le miroir, et est projeté sur le réseau de diffraction 104 avant d'être couplé dans le guide d'onde 102. L'angle d'incidence du faisceau lumineux sur le réseau 104 peut être par exemple de l'ordre de 19,48° pour un angle d'inclinaison du miroir 152 de l'ordre de 54,74° par rapport à la direction principale du guide d'onde et/ou de la fibre optique.

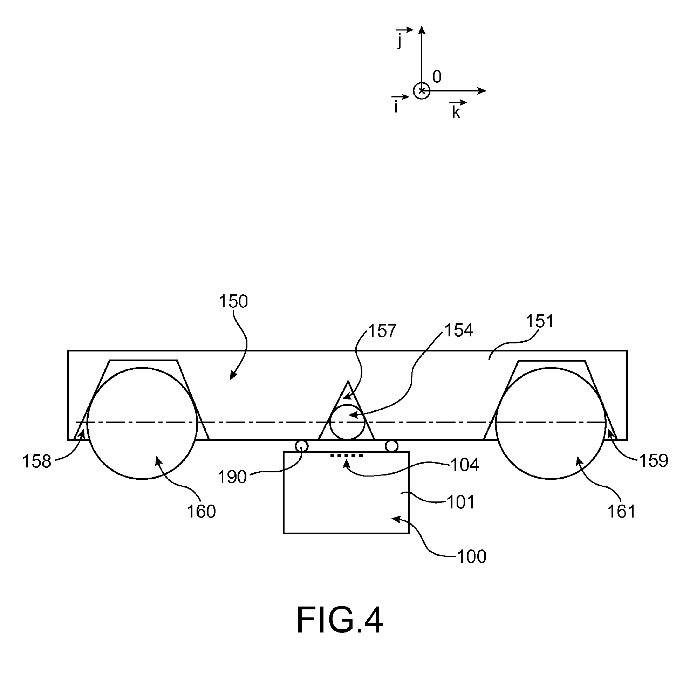

Sur la figure 4, le substrat 101 du premier élément 100 et le substrat 151 du capot optique 150 sont représentés selon une vue de face. Le capot optique 150 comporte en outre des tranchées 158, 159, de part et d'autre de la tranchée 157 comportant le système optique. Les tranchées 158, 159, sont prévues pour accueillir des broches de raccordements 160, 161 ou « pins de guidage » du connecteur. Les tranchées 158, 159, s'étendent dans une direction parallèle à celle de la tranchée 157 (la direction de la tranchée étant parallèle au vecteur *̅i̅*̅ du repère orthogonal [O; *̅i̅*̅ ;*̅j̅*̅ ; *̅k̅*̅ ] sur la figure 4). Les tranchées 158, 159, permettent un assemblage par emboitement ou imbrication du support de la fibre 120 avec le capot 150. La distance séparant les broches 160, 161, de raccordement du connecteur peut être par exemple de l'ordre de 4,6 mm.

Selon une possibilité de mise en oeuvre, la position du système optique du capot 150 de couplage par rapport à la fibre 122, peut être ajustée ou pré-réglée. La position du capot 150 par rapport à la fibre optique 122 dans une direction suivant l'axe optique de cette dernière (parallèle à un vecteur *̅i̅*̅ du repère orthogonal [O;*̅i̅*̅;*̅j̅*̅;*̅k̅*̅]) peut être ajustée et réglée. En modifiant la position longitudinale du capot 150 par rapport à la fibre 122, ou en déplaçant la fibre 122 dans une direction parallèle à la rainure 157, on peut ajuster le grandissement du système optique.

La position du capot 150 par rapport à la fibre optique 122 dans une direction orthogonale au plan principal du substrat 151 (le plan principal du substrat 151 étant un plan défini par un plan passant par ce dernier et parallèle au plan [O; *̅i̅*̅ ; *̅k̅*̅ ] du repère orthogonal [O;*̅i̅*̅;*̅j̅*̅;*̅k̅*̅]), peut être également ajustée et réglée. En modifiant la position en hauteur de la fibre 122 par rapport à la lentille 154, ou en déplaçant le capot 150 par rapport à la fibre 122 dans une direction orthogonale au plan principal du substrat 151, on peut ajuster l'angle d'incidence du faisceau lumineux sur le premier élément 100 et en particulier sur le réseau de diffraction 104.

La lentille 154 peut être prévue avec un tirage inférieur à 100 micromètres ou à 200 micromètres, le tirage étant défini ici comme la distance minimale entre le foyer image et le bord de la lentille 154. Le tableau suivant donne un ensemble de valeurs de focales EFL et de valeurs de tirages BFL, pour plusieurs lentilles sphériques du type de celle référencée 154 et susceptibles d'être intégrées au dispositif de couplage optique, en fonction du diamètre DIA et de l'indice de réfraction de ces lentilles.

| **DIA** | **n** | **EFL** | **BFL** |
|---|---|---|---|
| 0,3 | 1,77 | 0,172 | 0,022 |
| 0,5 | 1,77 | 0,287 | 0,037 |
| 1 | 1,77 | 0,575 | 0,075 |
| 0,3 | 1,5 | 0,225 | 0,075 |
| 0,5 | 1,5 | 0,375 | 0, 125 |
| 1 | 1,5 | 0,75 | 0,25 |

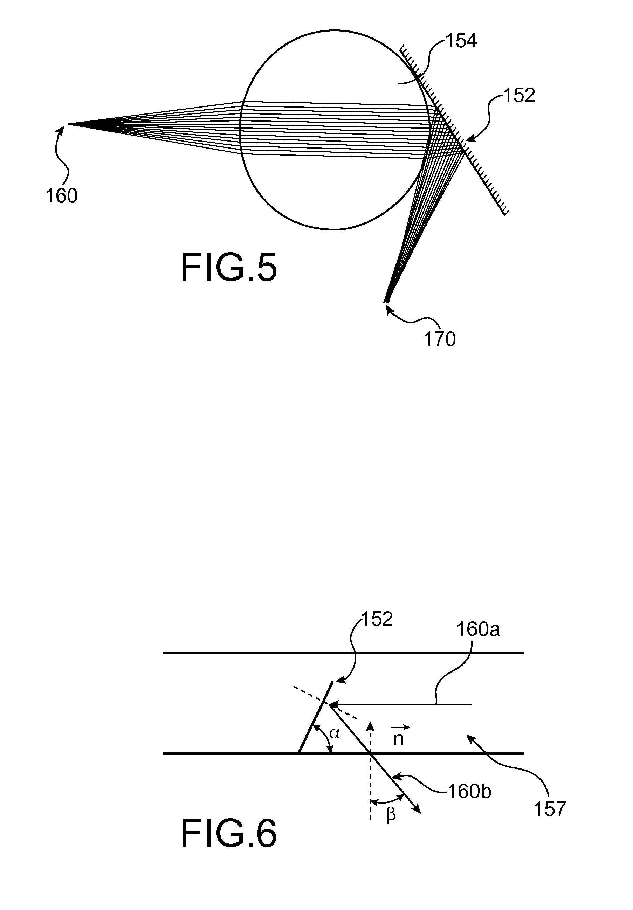

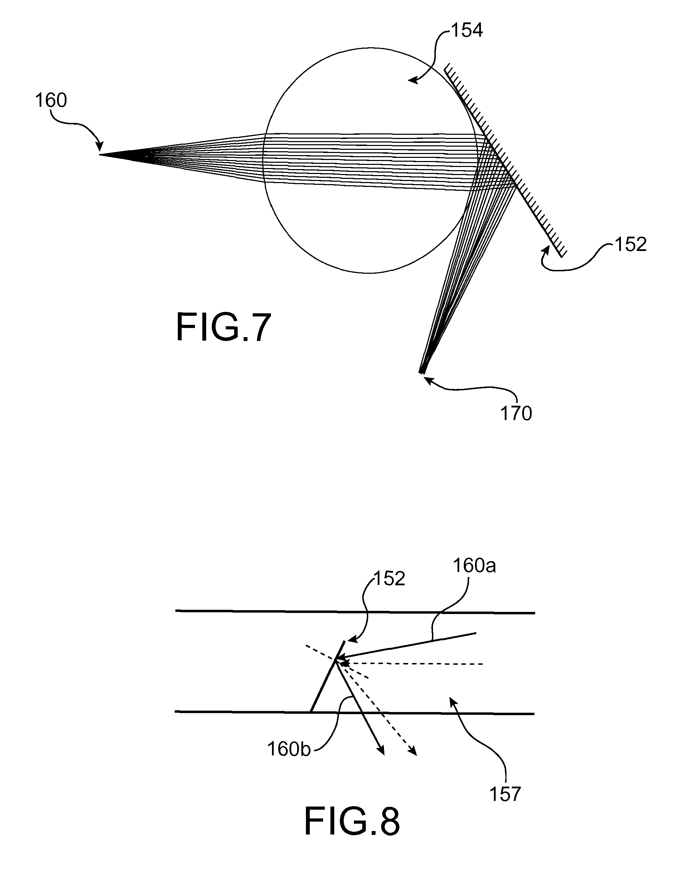

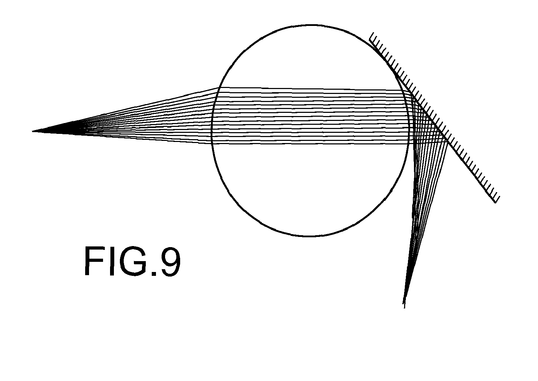

On considère un cas par exemple où la fibre optique 122 est une fibre monomode d'ouverture numérique ON par exemple de l'ordre de 0,14 et la lentille 154 a un diamètre de l'ordre de 0,5 mm et d'indice de réfraction n = 1,5. La figure 5 illustre la propagation d'un faisceau 160 issu de la fibre optique 122, pour un réglage prévu pour obtenir un système de grandissement m ≈1, la fibre 122 étant située à une distance de l'ordre de 450 µm de la lentille 154 et le point image 170 étant situé à une distance de l'ordre de 50 µm de la lentille 154. Soit α l'angle que réalise le miroir 152 avec la direction principale de la rainure 157. Pour un faisceau incident 160a sensiblement parallèle à la direction principale de la rainure 157, on obtient un faisceau réfléchi 160b avec un angle β par rapport à une normale environ égal à 19,48° (figure 6). Sur la figure 7, le même système optique que précédemment décrit en liaison avec la figure 5 est illustré, mais avec des distances entre la fibre 122 et lentille 154 ajustées de manière à obtenir un grandissement m≈1,5 accru. Pour obtenir un tel grandissement, la fibre 122 peut être placée à une distance de l'ordre de 375 µm de la lentille 154. Le point image 170 peut être situé quant à lui à une distance de l'ordre de 200 µm de la lentille. Un ajustement de l'angle d'incidence est illustré sur la figure 8. Cet ajustement peut être obtenu en décalant la fibre 122 dans le plan objet par rapport à l'axe optique initial, ce qui a pour effet de modifier l'angle d'incidence du faisceau incident 160a sur le miroir 152 et ainsi de modifier l'inclinaison du faisceau réfléchi 160b. La figure 9 reprend le même système optique que précédemment avec un décentrement de 50 µm de la fibre par rapport à l'axe optique initial afin d'obtenir un angle du faisceau réfléchi par rapport à la verticale d'environ 12° au lieu de 19.48°.

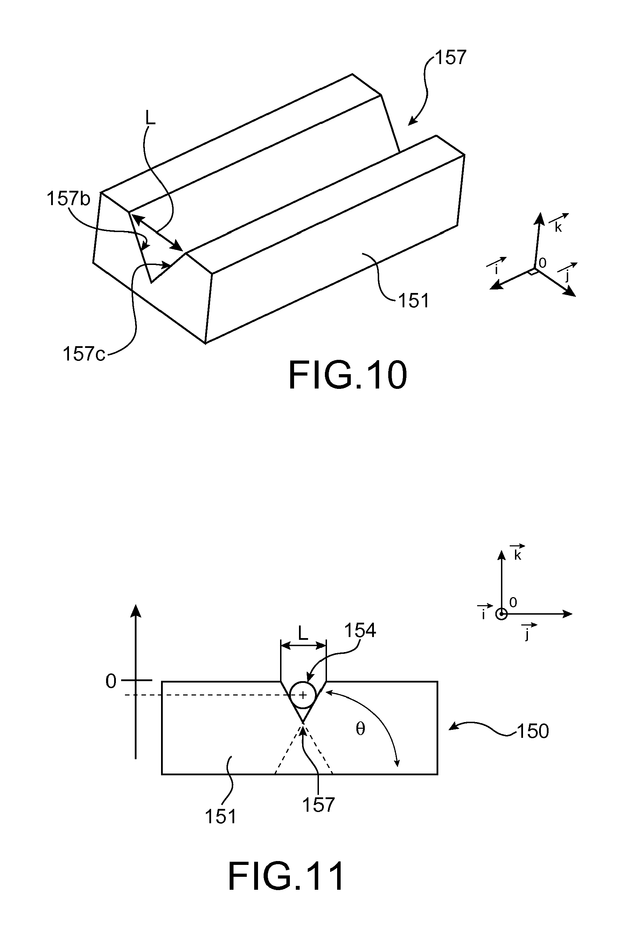

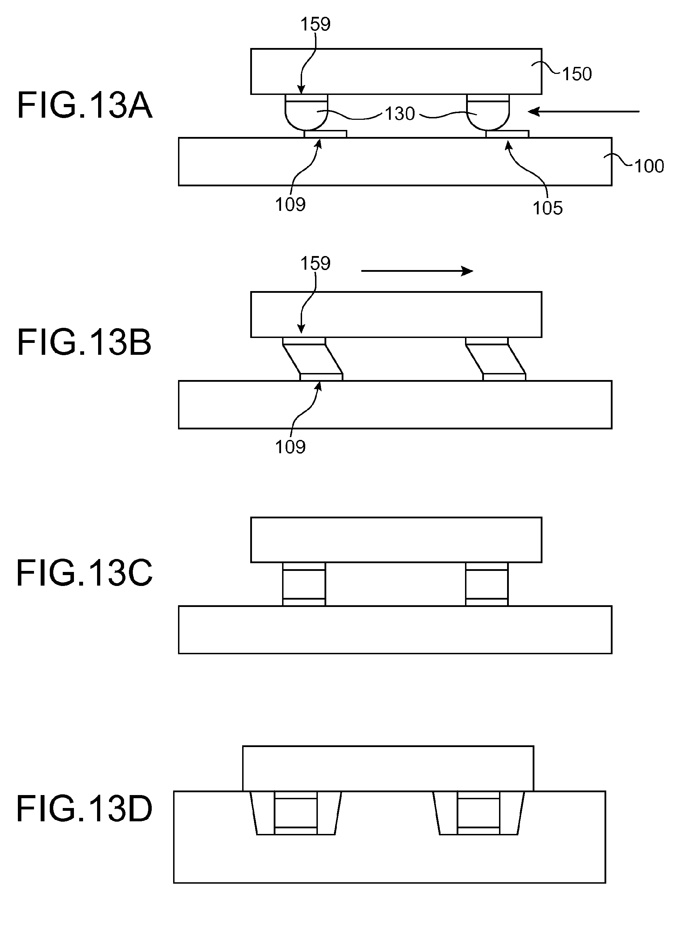

La figure 10 illustre, selon une vue en perspective, une tranchée ou une rainure en forme de V également appelé « V-groove » formée dans un substrat 151 à partir duquel le capot optique est destiné à être réalisé. La rainure peut être du type de celle référencée 157 sur la figure 2, dans laquelle un système optique comportant par exemple la lentille 154 de forme sphérique et le miroir sont destinés à être réalisés. La rainure 157 en forme de V peut avoir des flancs longitudinaux réalisant un angle par exemple de l'ordre de 54,75° avec le plan principal du substrat 151, ainsi qu'une paroi réalisant également un angle de l'ordre de 54,75° avec le plan principal du substrat et non nul avec les flancs longitudinaux. Une telle rainure 157 peut être obtenue par gravure chimique anisotrope, par exemple à l'aide de KOH ou de NaOH ou de NH₄OH dans le cas où le substrat 151 est à base de silicium monocristallin, la gravure étant alors réalisée dans le plan <111>. La profondeur est déterminée par la largeur de la bande d'attaque chimique qui définit les plans d'arrêt. D'autres tranchées ou rainures (non représentées sur cette figure) telles que celles référencées 158, 159 sont également réalisées dans le substrat 151 à l'aide du procédé de gravure qui vient d'être décrit.

Sur la figure 11, la rainure 157 réalisée dans le substrat 151 du capot optique 150, est vue en coupe transversale, et est dotée de la lentille 154 en forme de sphère. La largeur L de cette rainure 157 au niveau de la surface du substrat 151 peut être comprise par exemple entre 0,3 mm et 1 mm.

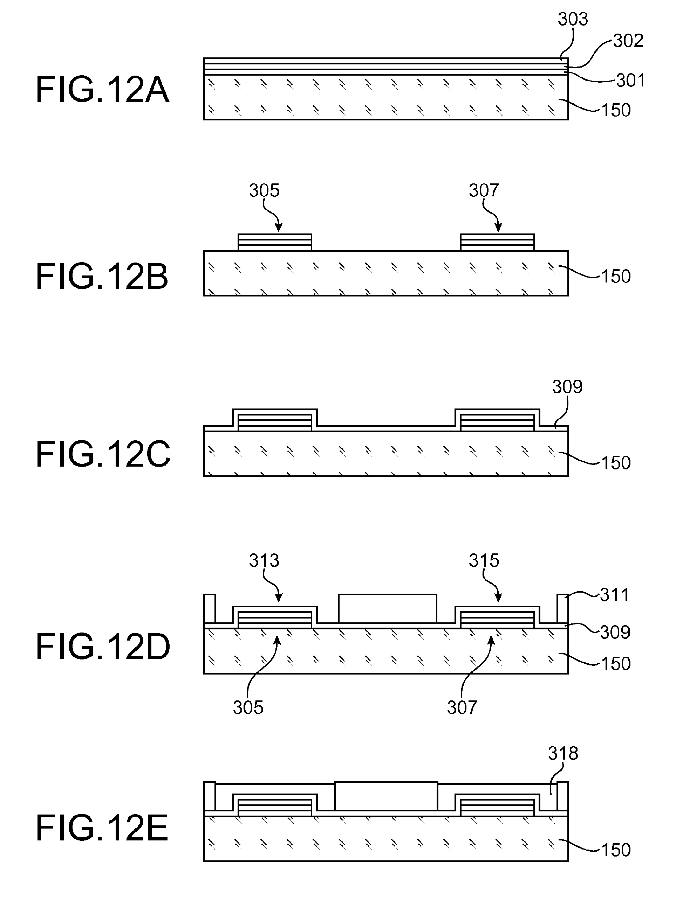

Un procédé de réalisation des billes 130 de brasures sur le capot optique 150, va à présent être donné en liaison avec les figures 12A à 12H. Sur la face arrière du capot optique 150, ou sur la face du capot 150 sur laquelle les tranchées 157, 158, 159, sont réalisées, on forme une couche métallique, par exemple à base de titane, et/ou de nickel, et/ou de palladium, et/ou d'or, ou un empilement de plusieurs couches 301, 302, 303, métalliques, par exemple d'une couche de titane, puis d'une couche nickel, puis d'une couche de palladium (figure 12A).

Ensuite, on forme des plots 305, 307 dans les couches 301, 302, 303, métalliques par exemple à l'aide d'un procédé de photolithographie lors duquel, on dépose une couche de résine sur l'empilement de couches 301, 302, 303, métalliques, on insole cette couche de résine par exemple à l'aide d'un rayonnement UV et à travers un masque, de manière à réaliser un masquage formé de motifs de résine, puis on grave les couches métalliques 301, 302, 303, à travers le masquage de manière à former les plots 305, 307. Le masquage est ensuite retiré (figure 12B).

Ensuite, on dépose un fond continu métallique 309, par exemple à base de titane (figure 12C).

Puis, on forme un masque 311 de résine sur ledit fond continu 309 métallique, le masque 311 de résine comportant des trous 313, 315 dévoilant les plots 305, 307 recouverts par le fond métallique 309 (figure 12D).

Ensuite, on rempli les trous 313, 315 à l'aide d' un matériau fusible 318, par exemple un métal fusible tel que de l'indium ou un alliage or-étain, de manière à former des zones de matériau fusible 318 recouvrant les plots. Le remplissage des trous 313, 315, peut être réalisé par exemple par croissance électrolytique (figure 12E).

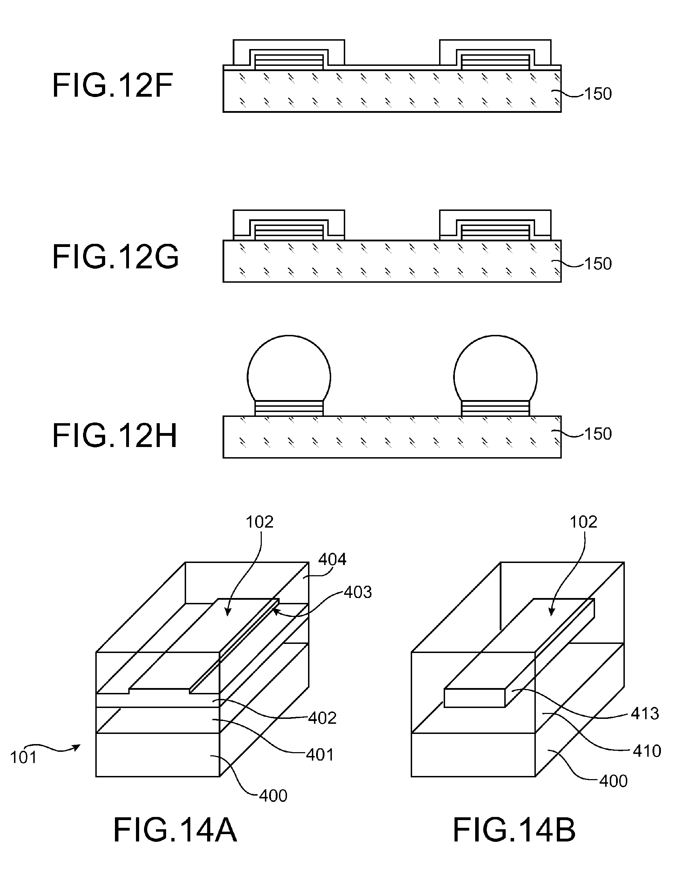

Ensuite, on élimine la résine 311 (figure 12F), puis on grave le fond métallique 309 continu de part et d'autre de chacune des zones de matériau fusible 318 (figure 12G).

Ensuite (figure 12H), on effectue une refonte du matériau fusible de manière à donner une forme sphérique aux zones de matériau fusible 318, et réaliser ainsi des billes de brasure 130.

Après avoir formé les billes de brasure 130 le capot optique 150 et le premier élément 100 sont assemblés à l'aide des billes 130 de brasure. Une technique d'assemblage dite "flip-chip" peut être mise en oeuvre. Les billes de brasure 130 peuvent assurer à la fois un assemblage et des connexions électriques. L'utilisation d'un report de type flip-chip permet de réaliser un auto-alignement du capot 150 par rapport au premier élément 100.

Une hybridation ou un assemblage du capot 150 sur le premier élément par méthode "flip-chip" est illustré sur les figures 13A à 13D. Une telle méthode utilise les forces de tension superficielle exercées par une goutte de soudure en fusion sur une pièce à souder et permet de réaliser un auto-alignement du capot 150 avec le premier élément 100. On place tout d'abord des billes 130 d'une soudure fusible sur des zones conductrices 159 du capot 150 positionnées avec précision par photolithographie. Les billes peuvent être à base par exemple d'un alliage eutectique Au-Sn, ou d'Indium, et sont mises en contact avec des plots de connexion 109 formés sur le premier élément 100 et également positionnées avec précision par photolithographie (figure 13A à 13D). De cette manière, on peut réaliser simultanément un alignement optique, un contact électrique ainsi qu'un contact thermique entre le capot et le premier élément 100. L'assemblage ou hybridation peut être réalisée de la manière décrite dans le document FR 2 807 168.

Sur les figures 14A et 14B, un premier exemple et un deuxième exemple de mises en oeuvre du guide d'onde 102 formé sur le substrat 101 du premier élément 100 sont représentés.

Selon le premier exemple de mise en oeuvre (figure 14A) le guide d'onde 102 est un guide de type dit « arête », formé d'un bloc parallélépipédique gravé 403 à base d'un matériau semi-conducteur, reposant sur une couche 402 à base dudit matériau semi-conducteur, par exemple du Si. La couche 402 sur laquelle le bloc parallélépipédique gravé 403 repose, peut être la couche semi-conductrice d'un substrat semi-conducteur sur isolant et elle-même reposer sur la couche isolante 401 dudit substrat. Le bloc parallélépipédique gravé 403 et la couche 402 peuvent être recouvertes d'une couche isolante 404 jouant le rôle de gaine optique, et par exemple à base de SiO₂.

Selon le deuxième exemple de mise en oeuvre (figure 14B) le guide d'onde 102 est un guide de type dit « ruban », formé d'un bloc parallélépipédique 413 enrobé d'une couche isolante 410 par exemple à base de SiO₂, servant de gaine. Typiquement, les guides d'onde qui viennent d'être décrits présentent un mode optique de dimension: par exemple de 0,5 x 0,2 µm² pour le guide de type ruban, et de 0, 9 x 0,4 µm² pour le guide de type arête. Ces guides présentent de faibles pertes sur le mode de polarisation TE, par exemple entre 0,4 et 5 dB/cm selon le matériau et le type de guide. D'autres matériaux peuvent être utilisés pour réaliser ce type de guide, par exemple de la silice dopée au phosphore, ou bore, ou germanium, ou un polymère inorganique fabriqué par procédé Sol-Gel, une résine, un polymère. D'autres techniques de fabrication comme l'écriture laser directe sur matériau photosensible par exemple peuvent être également utilisées.

## Revendications

1. Dispositif optique comprenant un capot (150) d'assemblage et de couplage optique entre au moins un guide d'onde (102) et au moins une fibre optique (122), le capot (150) étant destiné à être fixé à un support du guide d'onde et comprenant:
- un substrat (151),
- une ou plusieurs rainures formées dans le substrat (158, 159) prévues pour permettre au capot de s'imbriquer avec des broches de raccordement d'un connecteur de la fibre optique,
- au moins une autre rainure (157) formée dans le substrat et dotée de flancs longitudinaux, d'un fond, et d'une paroi réalisant un angle non-nul avec ledit fond et lesdits flancs longitudinaux, ladite autre rainure étant destinée à être placée dans le prolongement de l'axe optique de la fibre et de sorte que ladite paroi est située en regard de la fibre,
- un système optique disposé au niveau de ladite paroi de ladite autre rainure (157) et prévu pour dévier vers la fibre un faisceau lumineux en provenance du guide d'onde et/ou dévier vers le guide d'onde un faisceau lumineux en provenance de la fibre optique.

2. Dispositif optique selon la revendication 1, dans lequel ladite paroi présente un angle non-nul et différent de 90° par rapport au plan principal du substrat.

3. Dispositif optique selon l'une des revendications 1 ou 2, le système optique comprenant : un miroir (152) recouvrant ladite paroi.

4. Dispositif optique selon la revendication 3, le système optique comprenant : une lentille sphérique (154) accolée au miroir (152).

5. Dispositif optique selon l'une des revendications 1 à 4, dans lequel ledit support du guide d'onde est fixé audit capot par l'intermédiaire de billes de brasures.

6. Dispositif optique selon l'une des revendications 1 à 5, dans lequel au moins un réseau de diffraction repose sur le support du guide d'onde et est relié audit guide d'onde.

7. Dispositif optique selon l'un des revendications 1 à 6, dans lequel lorsque le capot optique est emboité avec le support de la fibre, le capot optique est mobile par rapport au support de la fibre dans une direction parallèle à la direction principale de la rainure.

8. Dispositif optique selon l'une des revendications 1 à 7, dans lequel le support du guide d'onde est une puce formée à partir d'un substrat et dotée d'un ou plusieurs composants électroniques et/ou optoélectroniques.
